# EUROPÄISCHE PATENTSCHRIFT

(11) **EP 1 361 947 B1**
(45) Veröffentlichungstag und Bekanntmachung des Hinweises auf die Patenterteilung: **08.12.2004**
(21) Anmeldenummer: 02722082.1
(22) Anmeldetag: 15.02.2002
(51) Int. Cl.: B29C 45/66

(54) **SCHLIESSEINRICHTUNG IN EINER SPRITZGIESSMASCHINE FÜR KUNSTSTOFFE**
CLOSING DEVICE IN AN INJECTION MOULDING MACHINE FOR SYNTHETIC MATERIALS
DISPOSITIF DE FERMETURE DANS UNE PRESSE A INJECTION DE MATIERE SYNTHETIQUE

(30) Priorität: 15.02.2001 DE 10107502; 28.06.2001 DE 10130669; 19.10.2001 DE 10152688
(43) Veröffentlichungstag der Anmeldung: 19.11.2003
(73) Patentinhaber: Mannesmann Plastics Machinery GmbH, 80997 München (DE)
(72) Erfinder: FISCHBACH, Gunther, 82256 Fürstenfeldbruck (DE)
(74) Vertreter: Wilhelm, Ludwig, Dipl.-Phys.
(86) Internationale Anmeldenummer: PCT/EP2002/001618
(87) Internationale Veröffentlichungsnummer: WO 2002/064348

(56) Entgegenhaltungen:
- WO-A-01/47685
- WO-A-94/04337
- US-A- 5 804 224
- PATENT ABSTRACTS OF JAPAN vol. 10, no. 336 (M-535), 14. November 1986 (1986-11-14) & JP 61 140363 A (TOSHIBA MACH CO LTD), 27. Juni 1986 (1986-06-27)

## Beschreibung

Die Erfindung betrifft eine Schließeinrichtung gemäß dem Oberbegriff von Patentanspruch 1.

Aus der EP 0 658 136 B1 ist eine Schließeinheit für Formwerkzeuge von Spritzgießmaschinen bekannt, bei der zwischen der beweglichen Werkzeugaufspannplatte und einer Endplatte ein Kniehebelschließsystem zum Verschieben der beweglichen Werkzeugaufspannptatte vorgesehen ist. Mehrere sogenannte Fünfpunkt-Kniehebelsysteme sind mit einem gemeinsamen Kreuzkopf gekuppelt An diesem Kreuzkopf greift drehfest eine Gewindespindel an, welche mit einer Spindelmutter in Eingriff steht, die axial unverschiebbar, aber drehantreibbar in der Endplatte aufgenommen ist. Zum Zwecke des Drehantriebs ist die Spindelmutter mit der Hohlwelle eines Elektromotors gekuppelt, welcher an die Außenseite der Endplatte angeflanscht ist. Die Innenabmessung der Hohlwelle ist dergestalt auszulegen, dass sie geeignet ist, die gesamte, nach hinten aus der Spindelmutter ausfahrbare Länge der Gewindespindel problemlos aufzunehmen. Die Kniehebelsysteme sind symmetrisch zur, die Gewindespindel, die Spindelmutter und der Elektromotor mit seiner Hohlwelle sind fluchtend mit der Kraftachse der Schließeinheit. Ein ähnliches System ist in der DE-PS 195 24 314 C1 beschrieben.

Nachteilig an diesem System ist, dass der außerhalb der Endplatte angeordnete Elektromotor und die an die Spindellänge angepaßte Innenabmessung der Hohlwelle zu einer vergleichsweise lang bauenden Schließeinrichtung führen.

Der Erfindung liegt die Aufgabe zugrunde, eine gattungsgemäße Schließeinrichtung zu schaffen, die deutlich kürzer baut und zusätzlich eine kostengünstige Konstruktion erlaubt.

Die Erfindung löst diese Aufgabe durch die Merkmale des Anspruchs 1 und durch die Merkmale der nebengeordneten Ansprüche 16 und 17. Dabei liegt beiden erfindungsgemäßen Lösungen der allgemeine, grundsätzliche Gedanke zugrunde, so viele Bauteile wie möglich in einander anzuordnen, so dass sich ihre einzelnen axialen Baulängen nicht aufsummieren. Die Länge der Schließeinrichtung wird dann nicht durch die Summe der axialen Ausdehnungen der einzelnen Bauteile dominiert, sondern durch das längste der in einander liegenden Bauteile.

Da der Hohlwellenmotor in einer Aussparung der Endplatte aufgenommen werden kann, entfällt im Vergleich zum Stand der Technik die Baulänge des Motors an der Außenseite der Endplatte. Auch wenn ein Teil der Baulänge des Motors auf die Innenseite der Endplatte hindurchragt, stellt sich dies immer dann als Vorteil dar, wenn auf der Innenseite der Endplatte konstruktionsbedingt bereits zumindest teilweise Platz zur Aufnahme des Motors vorhanden ist. Die gesamte Baulänge der Spritzgießmaschine wird verringert. Diese Verringerung der Baulänge der Spritzgießmaschine entspricht der Dicke der Endplatte.

Die nachfolgenden Ansprüche sind vorteilhafte Weiterbildungen der Erfindung.

Vorzugsweise ist die Aussparung der Endplatte als Durchbruch durch die Endplatte ausgebildet. Auf diese Weise kann die volle Dicke der Endplatte als axiale Baulänge der Schließeinrichtung eingespart werden.

Der Hohlwellenmotor durchdringt dabei vorteilhafter Weise die Endplatte. Dadurch wird die volle Dicke der Endplatte als Einsparung axialer Baulänge der Schließeinrichtung ausgenützt.

Die Endplatte kann in einer von der reinen Plattenform abweichenden geometrischen Form gestaltet werden. Sie weist dabei aber vorzugsweise eine Rückwand mit einer Aussparung auf, in der der Hohlwellenmotor aufgenommen werden kann. Auf diese Weise wird wiederum die volle Dicke der Endplatte eingespart, wenn der Motor länger ist als die Endplatte dick ist.

Der größte Außendurchmesser des Hohlwellenmotors ist vorzugsweise kleiner als der kleinste innendurchmesser des Durchbruchs durch die Endplatte. Dies gewähneistet, dass der Hohlwellenmotor vollständig in den Durchbruch durch die Endplatte hineinpaßt und der Hohlwellenmotor die Endplatte durchdringen kann.

In einer vorteilhaften Ausgestaltung der Erfindung weist die Endplatte eine vorzugsweise zylinderförmige Aussparung auf, in die der Hohlwellenmotor einfahrbar und/oder durchfahrbar ist. Durch diese Weiterbildung der Erfindung wird in jedem Fall die Baulänge der Spritzgießmaschine um die Dicke der Endplatte verringert. Die Erkenntnis, die Endplatte mit einer zylinderförmige Aussparung auszugestalten, in die der Hohlwellenmotor einfahrbar ist, verleiht dem Grundgedanken der Erfindung, so viele Bauteile wie möglich in einander anzuordnen, so dass sich ihre einzelnen axialen Baulängen nicht aufsummieren, in bezug auf die Realisierbarkeit der Konstruktion einen hohen praktischen Wert und ermöglicht eine erhebliche Bauraumverkürzung.

In einer bevorzugten Ausführungsform der Erfindung ist die Spindel drehfest angeordnet. Dabei ist das der beweglichen Werkzeugaufspannplatte zugewandte Ende der Spindel mit dem Rotor des Hohlwellenmotors, vorteilhafter Weise über eine Spindelmutter im Eingriff und der Stator des Hohlwellenmotors mit dem Kniehebelmechanismus verbunden. Läuft der Motor, so verschiebt er sich axial und betätigt den Kniehebelmechanismus. Die Spindel dagegen ist ortsfest und ragt kaum über das äußere Ende der Endplatte hinaus. Dies bedeutet, dass die Baulänge der Spritzgießmaschine im wesentlichen durch die Endplatte begrenzt ist. Der Nachteil der Spritzgießmaschinen mit einer über eine Spindel angetriebenen Schließeinrichtung und einem an der Außenseite der Endplatte angeflanschten Hohlwellenmotor gemäß dem Stand der Technik, eine gegenüber einer Spritzgießmaschine mit Riemenantrieb der Schließeinrichtung höhere Baulänge aufzuweisen, ist damit vermieden. Der Direktantrieb über einen Hohlwellenmotor und eine Spindel bietet aber gegenüber einer Übersetzung mit Zahnriemen zahlreiche Vorteile. Dieser Antrieb ist betriebssicherer als ein Riemenantrieb, der infolge eines gerissenen Riemens ausfallen kann. Der Direktantrieb ist servicefreundlicher, da ein Nachspannen des Riemens entfällt. Gegenüber einem Riemenantrieb ist er staubreduziert, da kein Staub infolge von Riemenabrieb entstehen kann. Desweiteren besitzt er einen höheren Wirkungsgrad und verursacht keine Abrollgeräusche des Riemens. Die Regelgüte ist gegenüber einem Riemenantrieb, bei dem der Riemen als elastisches Element wirkt, deutlich besser. Eine Hysterese ist infolge der hohen Steifigkeit des Spindelantriebs nicht vorhanden. Das Antriebssystem ist schneller, da trotz höherer Massenträgheit wegen der vergleichsweise geringeren Drehzahl die Zieldrehzahl eher erreicht wird.

In einer Variante der Erfindung kann die Spindel durch die Endplatte geführt und in einer Ankerplatte drehfest befestigt sein.

In einer alternativen bevorzugten Ausführungsform der Erfindung ist die Spindel mit dem Rotor des Hohlwellenmotors drehfest verbunden und mit einer mit der Endplatte drehfest verbundenen Spindelmutter im Eingriff. Der Stator des Hohlwellenmotors ist mit dem Kniehebelmechanismus verbunden. Dies beinhaltet gegenüber der ersten bevorzugten Ausführungsform der Erfindung den Nachteil, dass die Spindel nicht dreh- und ortsfest ist, sondern beim Öffnen der Schließeinrichtung, bei dem der Hohlwellenmotor in Richtung Endplatte fährt, über die Endplatte hinausragt Damit wird der Vorteil der geringen Baulänge wieder geschmälert. Der Vorteil gegenüber der ersten bevorzugten Ausführungsform der Erfindung besteht aber darin, dass die Hohlwelle direkt mit der Spindel verbunden werden kann. Damit entfällt die mit der Hohlwelle verbundene Spindelmutter, die mit der Spindel im Eingriff steht. Diese Spindelmutter weist aber wegen ihrer großen Masse und wegen ihres großen Durchmessers ein erhebliches Trägheitsmoment auf. Damit stellt sie im Vergleich zu einer drehbaren Spindel eine höhere dynamische Last dar. Die Verringerung der dynamischen Last in der Ausführungsform der Erfindung mit drehbarer Spindel ermöglicht ein schnelleres Verfahren der Schließeinrichtung. Die in dieser Ausführungsform drehfest mit der Endplatte verbundene Spindelmutter stellt keine hohen Anforderungen an das Auswuchten. Bei besonders hochwertigen Spritzgießmaschinen, bei denen der Platzbedarf zweitrangig ist, die aber eine sehr hohe Dynamik aufweisen sollen, ist diese alternative Ausführungsform der Erfindung besonders vorteilhaft.

Der Hohlwellenmotor ist in den beiden bevorzugten Ausführungsformen der Erfindung entweder unmittelbar am Kreuzkopf angeflanscht oder in diesem integriert, beispielsweise dadurch, dass der Kreuzkopf eine Ausnehmung zur Aufnahme des Hohlwellenmotors aufweist. Alternativ kann der Stator auch direkt durch geeignete Verbindungselemente an den Kniehebelmechanismus gekuppelt sein. Aufgrund der Erfindung kann das Reaktionsmoment des Antriebs und die Führung des Kreuzkopfes durch eine einzige kostengünstige Konstruktion realisiert werden.

In einer weiteren bevorzugten Ausführungsform der Erfindung ist der Stator des Hohlwellenmotors drehfest mit der Endplatte verbunden. Vorzugsweise ist dazu der Hohlwellenmotor in der Aussparung der Endplatte eingebaut. Die Spindel ist mit dem Rotor des Hohlwellenmotors drehfest verbunden. Die Anordnung hat den Vorteil eines sehr geringen Masseträgheitmoments und eignet sich daher vorzüglich zum schnellen Anfahren. Läuft der Motor, so dreht sich die Spindel. Mit der Spindel ist eine Spindelmutter im Eingriff, die mit dem Kniehebelmechanismus vorzugsweise über einen Kreuzkopf verbunden ist. Die drehende Spindel verschiebt die Spindelmutter axial und betätigt dadurch den Kniehebelmechanismus. Der Stator des Hohlwellenmotors dagegen ist ortsfest und ragt kaum über das äußere Ende der Endplatte hinaus. Dies bedeutet, dass die Baulänge der Spritzgießmaschine im wesentlichen durch die Endplatte begrenzt ist.

Ausgehend von einer Schließeinrichtung für eine Spritzgießmaschine für Kunststoffe mit einer feststehenden Werkzeugaufspannplatte und einer Endplatte, die über einen Kniehebelmechanismus mit einer beweglichen Werkzeugaufspannplatte verbunden ist, wird als weitere Ausgestaltung des allgemeinen, grundsätzlichen Erfindungsgedanken, so viele Bauteile wie möglich in einander anzuordnen, so dass sich ihre einzelnen axialen Baulängen nicht aufsummieren, vorgeschlagen, dass die Endplatte einen zylinderförmigen Fortsatz aufweist, auf dem ein Sonnenrad einer Verstelleinrichtung der Endplatte drehbar gelagert ist. Der zylinderförmige Fortsatz gibt der Endplatte zusätzliche Stabilität. Aus Stabilitätsgründen wird deshalb eine durchbrochene Endplatte vorzugsweise mit einem derartigen zylinderförmigen Fortsatz ausgestattet. Ist dieser zylinderförmige Fortsatz ausgestaltet, bietet es sich an, ihn als Aufnahme für ein Sonnenrad einer Verstelleinrichtung der Endplatte zu nutzen. Ein Sonnenrad aus Stahl und eine Endplatte aus Sphärolithguß geben eine gute Reibpaarung für ein Gleitlager. Hierbei ist nur ein minimaler Schmiermittelbedarf nötig.

Ausgehend von einer Schließeinrichtung für eine Spritzgießmaschine für Kunststoffe mit einer feststehenden Werkzeugaufspannplatte und einer Endplatte, die über einen Kniehebelmechanismus mit einer beweglichen Werkzeugaufspannplatte verbunden ist, wobei zur Betätigung des Kniehebelmechanismus ein mit einer Spindel zusammenwirkender Hohlwellenmotor mit einem Stator und einem Rotor vorgesehen ist, wird als weitere Ausgestaltung des allgemeinen, grundsätzlichen Erfindungsgedanken, so viele Bauteile wie möglich in einander anzuordnen, so dass sich ihre einzelnen axialen Baulängen nicht aufsummieren, vorgeschlagen, dass eine Spindelmutter in den Innenabmessungen des Rotors des Hohlwellenmotors Aufnahme finden kann. Diese konstruktive Ausgestaltung bietet den Vorteil, die gesamte Baulänge der erfindungsgemäßen Schließeinrichtung gegenüber denen des Stands der Technik um die axiale Länge der Spindelmutter zu verkürzen.

In einer vorteilhaften Ausgestaltung der Erfindung ist die Spindelmutter fest mit dem Rotor des Hohlwellenmotors verbunden ist. Dies ist vorzugsweise bei den Ausgestattungen der Schließeinrichtung mit axial verschieblichem Hohlwellenmotor, der mit dem Kniehebelmechanismus verbunden ist, ausgeführt. Diese Ausführungsform hat den Vorteil einer besonders kurzen axialen Baulänge der Schließeinrichtung.

In einer hierzu alternativen vorteilhaften Ausgestaltung der Erfindung ist die Spindelmutter in den Innenraum des Rotors des Hohlwellenmotors einfahrbar. Diese Technik findet vorzugsweise Anwendung bei der Ausgestaltung der Schließeinrichtung, bei der der Stator des Hohlwellenmotors drehfest mit der Endplatte verbunden ist und die Spindelmutter drehfest mit dem Kniehebelmechanismus verbunden ist. Die Spindel ist hier mit dem Rotor des Hohlwellenmotors drehfest verbunden. Diese Anordnung hat den Vorteil eines sehr geringen Masseträgheitmoments, da die Spindelmutter nicht rotiert, und eignet sich daher vorzüglich zum schnellen Anfahren. Die drehende Spindel verschiebt die Spindelmutter axial und betätigt dadurch den Kniehebelmechanismus. Wird die Schließeinrichtung vollständig geöffnet, d. h. werden die Kniehebel völlig in Richtung der Endplatte gezogen, so taucht die Spindelmutter in den Hohlwellenmotor ein. Die gesamte Baulänge der erfindungsgemäßen Schließeinrichtung wird in dieser Ausgestaltung gegenüber denen des Stands der Technik um die axiale Eintauchtiefe der Spindelmutter zu verkürzt.

Vorzugsweise werden die Ausgestaltungen des allgemeinen, grundsätzlichen Erfindungsgedanken, so viele Bauteile wie möglich in einander anzuordnen, so dass sich ihre einzelnen axialen Baulängen nicht aufsummieren, kombiniert angewendet. im Ergebnis führt dies zu einer Schließeinrichtung, bei der die Spindelmutter in den innenabmessungen des Rotors des Hohlwellenmotors Aufnahme finden kann und der Hohlwellenmotor in einer Aussparung der Endplatte aufgenommen werden kann. Somit können bei geöffneter Schließeinrichtung die Spindelmutter, der Hohlwellenmotor und die Endplatte in einander liegen.

In Zeichnungen sind Ausführungsbeispiele der Erfindung darstellt.

Es zeigen:
- Fig. 1: eine erfindungsgemäße Schließeinrichtung in einem Querschnitt,
- Fig. 2: eine Variante der erfindungsgemäßen Schließeinrichtung nach Fig. 1 mit drehbarer Spindel,
- Fig. 3: eine Variante der erfindungsgemäßen Schließeinrichtung nach Fig. 2 mit drehbarer Spindel, bei der der Hohlwellenmotor in einer zylinderförmigen Aussparung der Endplatte aufgenommen ist.

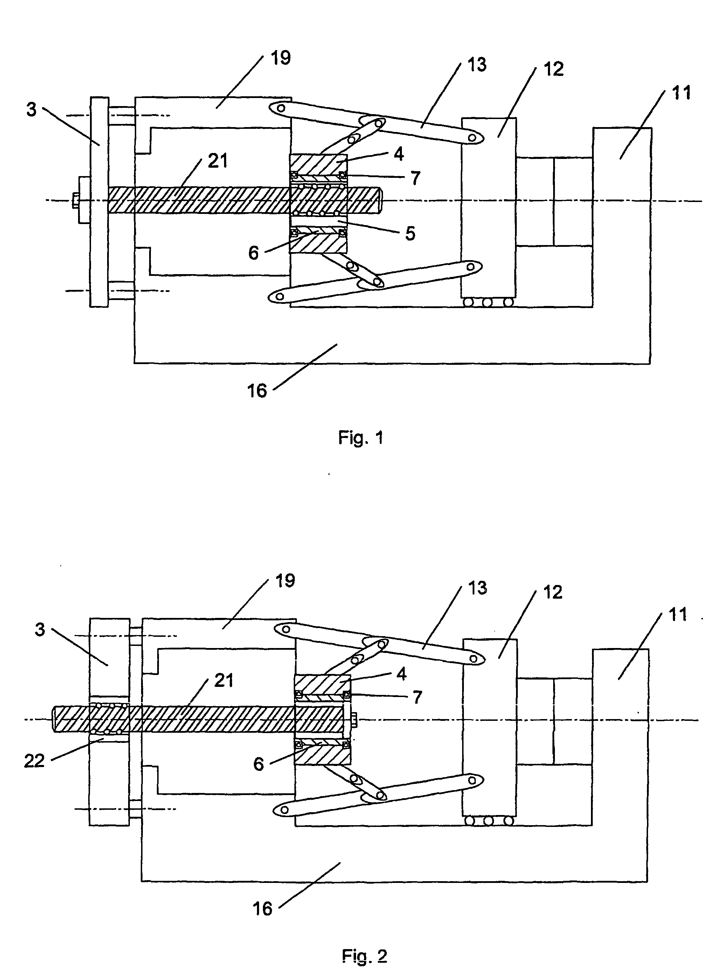

Ein Beispiel der Erfindung ist in der beigefügten Figur 1 dargelegt. Auf einem Maschinenbett 16 ist eine feststehende Werkzeugaufspannplatte 11 angeordnet, zu der sich durch einen Kniehebelmechanismus 13 antreibbar eine bewegliche Werkzeugaufspannplatte 12 axial bewegen läßt. Die feststehende Werkzeugaufspannplatte 11 ist über das Maschinenbett 16 mit einer Endplatte 19 verbunden. Eine Spindel 21 ist mit ihrem der beweglichen Werkzeugaufspannplatte 12 abgewandten Ende durch die Endplatte 19 geführt und in einer Ankerplatte 3 drehfest angeordnet. Auf dem anderen Ende der Spindel 21 ist ein Hohlwellenmotor 7 auf Führungsstangen axial verschieblich angeordnet, die zu beiden Seiten der Spindel 21 angeordnet und in der Endplatte 19 befestigt sind, so dass sie in der Figur 1 nicht ersichtlich sind. Eine Spindelmutter 5 ist mit der Hohlwelle bzw. dem Rotor 6 des Hohlwellenmotors 7 gekuppelt und steht in Eingriff mit der Spindel 21. Der Stator 4 des Hohlwellenmotors 7 ist an den Kniehebelmechanismus 13 angeflanscht. Auf diese Weise sind die Funktionen des Kreuzkopfes und die des Antriebsmotors zusammengefaßt

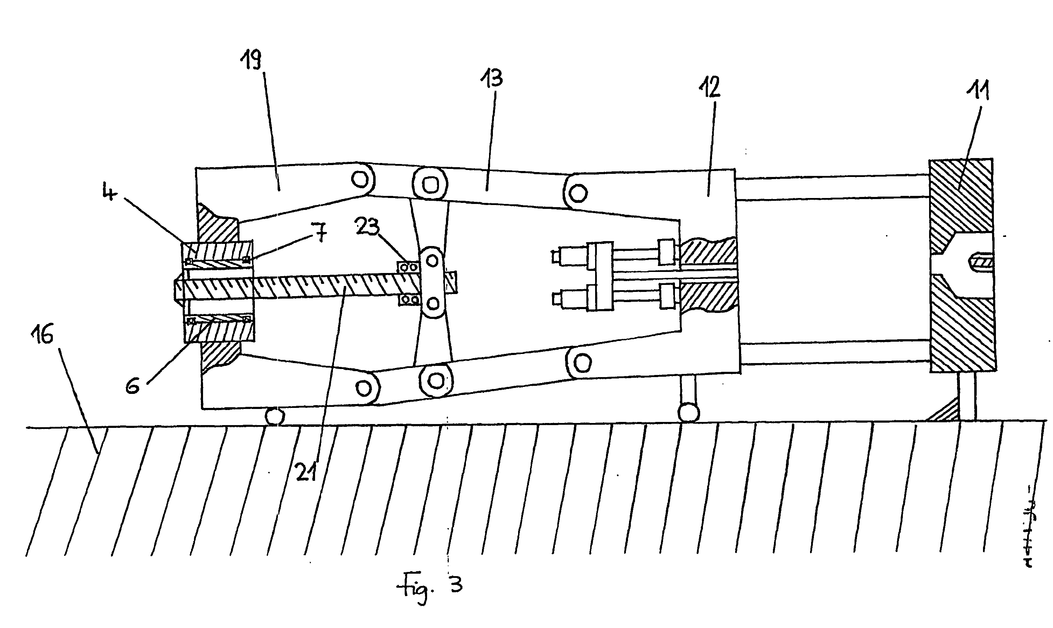

In Fig. 2 ist eine alternative Ausgestaltung der Erfindung dargestellt, bei der die Spindel 21 drehfest mit dem Rotor 6 verbunden ist und mit einer mit der Endplatte 19 drehfest verbundenen Spindelmutter 22 im Eingriff ist. Der Stator 4 des Hohlwellenmotors 7 ist mit dem Kniehebelmechanismus 13 verbunden. Die Spindel 21 und damit der Hohlwellenmotor 7 bewegt sich bei drehendem Rotor 6 axial. Über den Kniehebelmechanismus 13 wird die Schließeinrichtung geöffnet bzw. geschlossen. Beim Öffnen der Schließeinrichtung, bei dem der Hohlwellenmotor 7 in Richtung Endplatte 19 fährt, ragt die Spindel 21 über die Endplatte 19 hinaus.

In Fig. 3 ist eine weitere Variante der erfindungsgemäßen Schließeinrichtung aufgezeigt. Der Hohlwellenmotor 7 ist hierbei in einer Aussparung der Endplatte 19 aufgenommen. Dabei ist der Stator 4 des Hohlwellenmotors 7 drehfest mit der Endplatte 19 verbunden. Der Rotor 6 des Hohlwellenmotors 7 ist drehfest mit der Spindel 21 verbunden. Mit der Spindel 21 ist eine Spindelmutter 23 im Eingriff, die drehfest mit dem Kniehebelmechanismus 13 verbunden ist. Je nach Drehrichtung des Motors verschiebt sich die Spindelmutter 23 in Schließ- oder Öffnungsrichtung der Schließeinrichtung. Zum Öffnen der Schließeinrichtung wird die Spindelmutter 23 ganz in Richtung des Hohlwellenmotors 7 zurückgezogen. Schließlich taucht die Spindelmutter 23 in den Hohlwellenmotor 7 ein. Der Innenraum des Rotors 6 des Hohlwellenmotors 7 ist dazu so ausgestaltet, dass die Spindelmutter 23 in diesen einfahrbar ist. Diese Anordnung hat den Vorteil eines sehr geringen Masseträgheitmoments, da die Spindelmutter 23 nicht rotiert, und eignet sich daher vorzüglich zum schnellen Anfahren. Bei geöffneter Schließeinrichtung liegen die Spindelmutter 23, der Hohlwellenmotor 7 und die Endplatte 19 in einander.

### Schließeinrichtung in einer Spritzgießmaschine für Kunststoffe

### Positionsliste

### Spritzgießmaschine

- 11: Feststehende Werkzeugaufspannplatte
- 12: Bewegliche Werkzeugaufspannplatte
- 13: Kniehebelmechanismus
- 16: Maschinenbett
- 19: Endplatte
- 22: Spindelmutter

### Antrieb

- 3: Ankerplatte
- 4: Stator des Hohlwellenmotors
- 5: Spindelmutter
- 6: Rotor des Hohlwellenmotors
- 7: Hohlwellenmotor
- 21: Spindel
- 23: Spindelmutter

## Patentansprüche

1. Schließeinrichtung für eine Spritzgießmaschine für Kunststoffe mit einer feststehenden Werkzeugaufspannplatte (11) und einer Endplatte (19), die über einen Kniehebelmechanismus (13) mit einer beweglichen Werkzeugaufspannplatte (12) verbunden ist, wobei zur Betätigung des Kniehebelmechanismus (13) ein mit einer Spindel (21) zusammenwirkender Hohlwellenmotor (7) mit einem Stator (4) und einem Rotor (6) vorgesehen ist, **dadurch gekennzeichnet,**
**dass** der Hohlwellenmotor (7) in einer Aussparung der Endplatte (19) beweglich oder fest aufgenommen werden kann.

2. Schließeinrichtung nach Anspruch 1, **dadurch gekennzeichnet, dass** die Aussparung der Endplatte (19) als Durchbruch durch die Endplatte (19) ausgebildet ist.

3. Schließeinrichtung nach Anspruch 1 oder 2, **dadurch gekennzeichnet, dass** der Hohlwellenmotor (7) die Endplatte (19) durchdringt.

4. Schließeinrichtung nach einem der vorstehenden Ansprüche, **dadurch gekennzeichnet, dass** die Endplatte (19) eine Rückwand mit einer Aussparung aufweist, in der der Hohlwellenmotor (7) beweglich oder fest aufgenommen werden kann.

5. Schließeinrichtung nach einem der vorstehenden Ansprüche, **dadurch gekennzeichnet, dass** der größte Außendurchmesser des Hohlwellenmotors (7) kleiner als der kleinste Innendurchmesser des Durchbruchs durch die Endplatte (19) ist.

6. Schließeinrichtung nach einem der vorstehenden Ansprüche, **dadurch gekennzeichnet, dass** der Hohlwellenmotor (7) in die Aussparung der Endplatte (19) einfahrbar und/oder durchfahrbar ist.

7. Schließeinrichtung nach einem der vorstehenden Ansprüche, **dadurch gekennzeichnet, dass** die Spindel (21) drehfest angeordnet ist, dass das der beweglichen Werkzeugaufspannplatte (12) zugewandte Ende der Spindel (21) mit dem Rotor (6) des Hohlwellenmotors (7) in Eingriff ist, und dass der Stator (4) des Hohlwellenmotors (7) mit dem Kniehebelmechanismus (13) verbunden ist

8. Schließeinrichtung nach einem der vorstehenden Ansprüche, **dadurch gekennzeichnet, dass** die Spindel (21) durch die Endplatte (19) geführt und in einer Ankerplatte (3) drehfest befestigt ist.

9. Schließeinrichtung nach einem der vorstehenden Ansprüche 1 - 6, **dadurch gekennzeichnet, dass** die Spindel (21) mit dem Rotor (6) des Hohlwellenmotors (7) drehfest verbunden ist und mit einer mit der Endplatte (19) drehfest verbundenen Spindelmutter (22) im Eingriff ist, und dass der Stator (4) des Hohlwellenmotors (7) mit dem Kniehebelmechanismus (13) verbunden ist.

10. Schließeinrichtung nach einem der vorstehenden Ansprüche, **dadurch gekennzeichnet, dass** der Kniehebelmechanismus (13) an einen Kreuzkopf gekuppelt ist und dass der Hohlwellenmotor (7) an dem Kreuzkopf angeflanscht ist.

11. Schließeinrichtung nach einem der vorstehenden Ansprüche 1 - 9, **dadurch gekennzeichnet, dass** der Kniehebelmechanismus (13) an einen Kreuzkopf gekuppelt ist und dass der Kreuzkopf eine Ausnehmung zur Aufnahme des Hohlwellenmotors (7) aufweist.

12. Schließeinrichtung nach einem der vorstehenden Ansprüche 1 - 9, **dadurch gekennzeichnet, dass** der Kniehebelmechanismus (13) direkt an den Stator (4) des Hohlwellenmotors (7) gekuppelt ist.

13. Schließeinrichtung nach Anspruch 12, **dadurch gekennzeichnet, dass** der Stator (4) des Hohlwellenmotors (7) auf seitlich angeordneten Führungen verschieblich abgestützt ist.

14. Schließeinrichtung nach Anspruch 12 oder 13 **dadurch gekennzeichnet, dass** die bewegliche Werkzeugaufspannplatte (12) auf mehreren Säulen verschieblich geführt ist und dass der Stator (4) des Hohlwellenmotors (7) an einer oder mehreren dieser Säulen verschieblich geführt ist.

15. Schließeinrichtung nach einem der Ansprüche 1-4, **dadurch gekennzeichnet, dass** der Stator (4) des Hohlwellenmotors (7) drehfest mit der Endplatte (19) verbunden ist

16. Schließeinrichtung für eine Spritzgießmaschine für Kunststoffe mit einer feststehenden Werkzeugaufspannplatte (11) und einer Endplatte (19), die über einen Kniehebelmechanismus (13) mit einer beweglichen Werkzeugaufspannplatte (12) verbunden ist, **dadurch gekennzeichnet, dass** die Endplatte (19) einen zylinderförmigen Fortsatz aufweist, auf dem ein Sonnenrad einer Verstelleinrichtung der Endplatte (19) drehbar gelagert ist.

17. Schließeinrichtung für eine Spritzgießmaschine für Kunststoffe mit einer feststehenden Werkzeugaufspannplatte (11) und einer Endplatte (19), die über einen Kniehebelmechanismus (13) mit einer beweglichen Werkzeugaufspannplatte (12) verbunden ist, wobei zur Betätigung des Kniehebelmechanismus (13) ein mit einer Spindel (21) zusammenwirkender Hohlwellenmotor (7) mit einem Stator (4) und einem Rotor (6) vorgesehen ist, **dadurch gekennzeichnet,**
**dass** eine Spindelmutter (5, 23) in den Innenabmessungen des Rotors (6) des Hohlwellenmotors (7) Aufnahme finden kann.

18. Schließeinrichtung nach Anspruch 17, **dadurch gekennzeichnet, dass** die Spindelmutter (5) fest mit dem Rotor (6) des Hohlwellenmotors (7) verbunden ist.

19. Schließeinrichtung nach Anspruch 17, **dadurch gekennzeichnet, dass** die Spindelmutter (23) in den Innenraum des Rotors (6) des Hohlwellenmotors (7) einfahrbar ist.

20. Schließeinrichtung nach einem der Ansprüche 17 - 19, **dadurch gekennzeichnet, dass** der Hohlwellenmotor (7) in-einer-Aussparung der Endplatte (19) aufgenommen werden kann.

## Claims

1. Clamping device for an injection moulding machine for plastics materials comprising a fixed platen (11) and an end platen (19) which is connected to a movable platen (12) via a toggle mechanism (13), wherein a hollow shaft motor (7) with a stator (4) and a rotor (6) and cooperating with a spindle (21) is provided for actuating the toggle mechanism (13), **characterised in that** the hollow shaft motor (7) can be received in a movable or fixed manner in a recess of the end platen (19).

2. Clamping device according to claim 1, **characterised in that** the recess of the end platen (19) is formed as an opening through the end platen (19).

3. Clamping device according to claim 1 or 2, **characterised in that** the hollow shaft motor (7) penetrates the end platen (19).

4. Clamping device according to any one of the preceding claims, **characterised in that** the end platen (19) has a rear wall with a recess, in which the hollow shaft motor (7) can be received in a movable or fixed manner.

5. Clamping device according to any one of the preceding claims, **characterised in that** the largest external diameter of the hollow shaft motor (7) is smaller than the smallest internal diameter of the opening through the end platen (19).

6. Clamping device according to any one of the preceding claims, **characterised in that** the hollow shaft motor (7) can be inserted into and/or passed through the recess of the end platen (19).

7. Clamping device according to any one of the preceding claims, **characterised in that** the spindle (21) is arranged in a rotationally fixed manner, **in that** the end of the spindle (21) facing the movable platen (12) engages with the rotor (6) of the hollow shaft motor (7), and **in that** the stator (4) of the hollow shaft motor (7) is connected to the toggle mechanism (13).

8. Clamping device according to any one of the preceding claims, **characterised in that** the spindle (21) is guided through the end platen (19) and is fastened in a rotationally fixed manner in an anchor plate (3).

9. Clamping device according to any one of the preceding claims 1 to 6, **characterised in that** the spindle (21) is connected in a rotationally fixed manner to the rotor (6) of the hollow shaft motor (7) and engages with a spindle nut (22) connected in a rotationally fixed manner to the end platen (19), and **in that** the stator (4) of the hollow shaft motor (7) is connected to the toggle mechanism (13).

10. Clamping device according to any one of the preceding claims, **characterised in that** the toggle mechanism (13) is coupled to a crosshead and **in that** the hollow shaft motor (7) is flanged to the crosshead.

11. Clamping device according to any one of the preceding claims 1 to 9, **characterised in that** the toggle mechanism (13) is coupled to a crosshead and **in that** the crosshead has a recess for receiving the hollow shaft motor (7).

12. Clamping device according to any one of the preceding claims 1 to 9, **characterised in that** the toggle mechanism (13) is coupled directly to the stator (4) of the hollow shaft motor (7).

13. Clamping device according to claim 12, **characterised in that** the stator (4) of the hollow shaft motor (7) is displaceably supported on laterally arranged guides.

14. Clamping device according to claim 12 or 13, **characterised in that** the movable platen (12) is displaceably guided on a plurality of columns and **in that** the stator (4) of the hollow shaft motor (7) is displaceably guided on one or more of these columns.

15. Clamping device according to any one of claims 1 to 4, **characterised in that** the stator (4) of the hollow shaft motor (7) is connected in a rotationally fixed manner to the end platen (19).

16. Clamping device for an injection moulding machine for plastics materials comprising a fixed platen (11) and an end platen (19) which is connected to a movable platen (12) via a toggle mechanism (13), **characterised in that** the end platen (19) has a cylindrical prolongation, on which a sun wheel of an adjustment device of the end platen (19) is rotatably mounted.

17. Clamping device for an injection moulding machine for plastics materials comprising a fixed platen (11) and an end platen (19) which is connected to a movable platen (12) via a toggle mechanism (13), wherein a hollow shaft motor (7) with a stator (4) and a rotor (6) and cooperating with a spindle (21) is provided to actuate the toggle mechanism (13), **characterised in that** a spindle nut (5, 23) can be received in the inner dimensions of the rotor (6) of the hollow shaft motor (7).

18. Clamping device according to claim 17, **characterised in that** the spindle nut (5) is rigidly connected to the rotor (6) of the hollow shaft motor (7).

19. Clamping device according to claim 17, **characterised in that** the spindle nut (23) can be inserted into the interior of the rotor (6) of the hollow shaft motor (7).

20. Clamping device according to any one of claims 17 to 19, **characterised in that** the hollow shaft motor (7) can be received in a recess of the end platen (19).

## Revendications

1. Dispositif de fermeture pour une machine à mouler par injection pour des matières plastiques avec une plaque de serrage d'outil fixe (11) et une plaque d'extrémité (19) qui est reliée à une plaque de serrage d'outil mobile (12) par un mécanisme à levier coudé (13), un moteur à arbre creux (7) avec un stator (4) et un rotor (6) agissant avec une broche (21) étant prévu pour actionner le mécanisme à levier coudé (13), **caractérisé en ce que** le moteur à arbre creux (7) peut être logé de manière mobile ou fixe dans un évidement de la plaque d'extrémité (19).

2. Dispositif de fermeture selon la revendication 1, **caractérisé en ce que** l'évidement de la plaque d'extrémité (19) a la forme d'une percée à travers la plaque d'extrémité (19).

3. Dispositif de fermeture selon la revendication 1 ou 2, **caractérisé en ce que** le moteur à arbre creux (7) pénètre dans la plaque d'extrémité (19).

4. Dispositif de fermeture selon une des revendications précédentes, **caractérisé en ce que** la plaque d'extrémité (19) comporte une paroi arrière avec un évidement dans lequel le moteur à arbre creux (7) peut être logé de manière mobile ou fixe.

5. Dispositif de fermeture selon une des revendications précédentes, **caractérisé en ce que** le plus grand diamètre extérieur du moteur à arbre creux (7) est inférieur au plus petit diamètre intérieur de la percée à travers la plaque d'extrémité (19).

6. Dispositif de fermeture selon une des revendications précédentes, **caractérisé en ce que** le moteur à arbre creux (7) peut être rentré dans et/ou sorti de l'évidement de la plaque d'extrémité (19).

7. Dispositif de fermeture selon une des revendications précédentes, **caractérisé en ce que** la broche (21) est disposée de manière à résister à la torsion, **en ce que** l'extrémité de la broche (21) tournée vers la plaque de serrage d'outil mobile (12) est engrenée dans le rotor (6) du moteur à arbre creux (7) et **en ce que** le stator (4) du moteur à arbre creux (7) est relié au mécanisme à levier coudé (13).

8. Dispositif de fermeture selon une des revendications précédentes, **caractérisé en ce que** la broche (21) est guidée à travers la plaque d'extrémité (19) et fixée dans une plaque d'ancrage (3) de manière à résister à la torsion.

9. Dispositif de fermeture selon une des revendications précédentes 1 à 6, **caractérisé en ce que** la broche (21) est reliée au rotor (6) du moteur à arbre creux (7) de manière à résister à la torsion et s'engrène dans un écrou de broche (22) relié à la plaque d'extrémité (19) de manière à résister à la torsion et **en ce que** le stator (4) du moteur à arbre creux (7) est relié au mécanisme à levier coudé (13).

10. Dispositif de fermeture selon une des revendications précédentes, **caractérisé en ce que** le mécanisme à levier coudé (13) est couplé à une crosse de piston et **en ce que** le moteur à arbre creux (7) est bridé sur la crosse de piston.

11. Dispositif de fermeture selon une des revendications précédentes 1 à 9, **caractérisé en ce que** le mécanisme à levier coudé (13) est couplé à une crosse de piston et **en ce que** la crosse de piston comporte un creux pour loger le moteur à arbre creux (7).

12. Dispositif de fermeture selon une des revendications précédentes 1 à 9, **caractérisé en ce que** le mécanisme à levier coudé (13) est directement couplé au stator (4) du moteur à arbre creux (7).

13. Dispositif de fermeture selon la revendication 12, **caractérisé en ce que** le stator (4) du moteur à arbre creux (7) est appuyé de manière mobile sur des coulisses disposées latéralement.

14. Dispositif de fermeture selon la revendication 12 ou 13, **caractérisé en ce que** la plaque de serrage d'outil mobile (12) est guidée de manière mobile sur plusieurs colonnes et **en ce que** le stator (4) du moteur à arbre creux (7) est guidé de manière mobile sur une ou plusieurs de ces colonnes.

15. Dispositif de fermeture selon une des revendications 1 à 4, **caractérisé en ce que** le stator (4) du moteur à arbre creux (7) est relié à la plaque d'extrémité (19) de manière à résister à la torsion.

16. Dispositif de fermeture pour une machine à mouler par injection pour matières plastiques avec une plaque de serrage d'outil fixe (11) et une plaque d'extrémité (19) qui est reliée par un mécanisme à levier coudé (13) à une plaque de serrage d'outil mobile (12), **caractérisé en ce que** la plaque d'extrémité (19) comporte un prolongement en forme de cylindre sur lequel une roue solaire d'un dispositif de réglage de la plaque d'extrémité (19) est logée de manière à pouvoir tourner.

17. Dispositif de fermeture pour une machine à mouler par injection pour matières plastiques avec une plaque de serrage d'outil fixe (11) et une plaque d'extrémité (19) qui est reliée à une plaque de serrage d'outil mobile (12) par un mécanisme à levier coudé (13), un moteur à arbre creux (7) avec un stator (4) et un rotor (6) agissant avec une broche (21) étant prévu pour actionner le mécanisme à levier coudé (13), **caractérisé en ce que** un écrou à broche (5, 23) peut être logé dans les dimensions intérieures du rotor (6) du moteur à arbre creux (7).

18. Dispositif de fermeture selon la revendication 17, **caractérisé en ce que** l'écrou de broche (5) est relié de manière fixe avec le rotor (6) du moteur à arbre creux (7).

19. Dispositif de fermeture selon la revendication 17, **caractérisé en ce que** l'écrou de broche (23) peut être rentré dans l'espace intérieur du rotor (6) du moteur à arbre creux (7).

20. Dispositif de fermeture selon une des revendications 17 à 19, **caractérisé en ce que** le moteur à arbre creux (7) peut être logé dans un évidement de la plaque d'extrémité (19).
